# EUROPÄISCHE PATENTSCHRIFT

(11) **EP 2 595 846 B1**
(45) Veröffentlichungstag und Bekanntmachung des Hinweises auf die Patenterteilung: **20.08.2014**
(21) Anmeldenummer: 11772929.3
(22) Anmeldetag: 14.10.2011
(51) Int. Cl.: B60S 9/08, G05G 1/08, F02N 1/02

(54) **BETÄTIGUNGSSYSTEM FÜR STÜTZWINDEN AN SATTELAUFLIEGERN MIT EINEM FESTSTELLELEMENT ZUR ARRETIERUNG EINER ABKLAPPBAREN HANDKURBEL AUF DER EINGANGSWELLE DER STÜTZWINDE**
ACTUATING SYSTEM FOR A SUPPORT WINCH ON A SEMI-TRAILER WITH A FIXING ELEMENT FOR LOCKING A HINGED HAND CRANK ON THE INPUT SHAFT OF THE SUPPORT WINCH
SYSTÈME D'ACTIONNEMENT POUR UN TREUIL DE SOUTIEN SUR UN SEMI-REMORQUE AVEC UN ÉLÉMENT DE BLOCAGE POUR L'ARRÊT D'UNE MANIVELLE RABATTABLE SUR L'ARBRE D'ENTRÉ DU TREUIL DE SOUTIEN

(30) Priorität: 07.12.2010 DE 102010062489
(43) Veröffentlichungstag der Anmeldung: 29.05.2013
(73) Patentinhaber: SAF-HOLLAND GmbH, 63856 Bessenbach (DE)
(72) Erfinder: WEBER, Elmar, 48249 Dülmen (DE)
(74) Vertreter: Müller Schupfner & Partner Patent- und Rechtsanwaltspartnerschaft mbB
(86) Internationale Anmeldenummer: PCT/EP2011/067980
(87) Internationale Veröffentlichungsnummer: WO 2012/076221

(56) Entgegenhaltungen:
- JP-U- 55 140 370
- US-A1- 2006 202 460
- US-A1- 2007 235 981
- US-A1- 2007 257 243
- US-A1- 2008 164 683
- Saf-Holland Group: "Operating and maintenance manual", , 23. Juni 2010 (2010-06-23), XP55014468, Gefunden im Internet: URL:http://literature1.safholland.com/quic klit/SAF_Landing_Gear_Owners_Manual_en-DE. pdf [gefunden am 2011-12-09]

## Beschreibung

Die Erfindung betrifft ein Betätigungssystem für Stützwinden an Sattelaufliegern mit einem Feststellelement für die Arretierung einer abklappbaren Handkurbel auf der Eingangswelle einer Stützwinde, wobei die Handkurbel gelenkig an der Eingangswelle befestigt ist und zwischen wenigstens einer eingeklappten Ruheposition und wenigstens einer ausgeklappten Gebrauchsposition verschwenkt werden kann.

Stützwinden bzw. höhenverstellbare Stützen für Sattelauflieger oder dergleichen sind aus dem Stand der Technik bekannt. Meist wird die Höhenverstellung dieser Stützwinden durch einen Handantrieb bewerkstelligt, wozu eine Handkurbel vorgesehen ist, die bei Bedarf mit einem entsprechenden Stellantrieb verbunden wird. Ferner sind abklappbare Handkurbeln bekannt, die gelenkig mit einer Eingangswelle des Stellantriebs verbunden sind und zwischen wenigstens einer eingeklappten Ruheposition und wenigstens einer ausgeklappten Gebrauchsposition verschwenkt werden können.

Stützwinden sind aus der WO 2010/100017 A1 und der EP 1 670 667 B1 bekannt.

Die JP 55 140370 U zeigt ein Betätigungssystem mit einem Hebel und einem Feststellelement zur Arretierung des Hebels.

Eine Aufgabe der Erfindung ist es, eine Möglichkeit aufzuzeigen, wie die Handhabung von abklappbaren bzw. verschwenkbaren Handkurbeln für Stützwinden vereinfacht werden kann.

Diese Aufgabe wird gelöst von einem erfindungsgemäßen Betätigungssystem mit den Merkmalen des Anspruchs 1. Bevorzugte Weiterbildungen und Ausgestaltungen sind in den abhängigen Ansprüchen angegeben. Die Lösung der Aufgabe erstreckt sich auch auf ein Handhabungs- bzw. Betätigungssystem für Stützwinden an Sattelaufliegern, welches eine Handkurbel und wenigstens ein erfindungsgemäßes Feststellelement umfasst, wobei dieses Feststellelement unlösbar an der Handkurbel befestigt sein kann.

Das Feststellelement des erfindungsgemäßen Betätigungssystems dient der Arretierung einer abklappbaren Handkurbel auf der Eingangswelle einer Stützwinde für Sattelauflieger oder dergleichen, wobei die Handkurbel gelenkig an der Eingangswelle befestigt ist und zwischen wenigstens einer eingeklappten Ruheposition und wenigstens einer ausgeklappten Gebrauchsposition verschwenkbar ist. Es ist vorgesehen, dass dieses Feststellelement einen Befestigungsabschnitt für die Befestigung an der Handkurbel aufweist, sowie einen mit dem Befestigungsabschnitt verbundenen Federbügel, an dem wenigstens ein Verriegelungsabschnitt ausgebildet ist, wobei der Verriegelungsabschnitt in einer ausgeklappten Gebrauchsposition der Handkurbel die Stirnseite der Eingangswelle zumindest teilweise formschlüssig übergreift und gleichzeitig federkraftbedingt gegen diese Stirnseite der Eingangswelle vorgespannt bzw. gezogen wird, wodurch eine lösbare Arretierung der Handkurbel bewirkt wird. Das erfindungsgemäße Feststellelement ermöglicht in einfacher Weise eine Arretierung der Handkurbel in einer Gebrauchsposition. Ferner wird durch die Arretierung mittels des erfindungsgemäßen Feststellelements eine optimale Hebelposition der Handkurbel gegenüber der Eingangswelle der Stützwinde erreicht, wodurch das Drehen erleichtert wird. Bei abnehmbaren Handkurbeln kann das erfindungsgemäße Feststellelement auch zuverlässig ein Lösen der Handkurbel von der Eingangswelle verhindern. Insgesamt wird die Gefahr von Gesichts-, Knie- und/oder Rückenverletzungen reduziert, so dass das erfindungsgemäße Feststellelement auch dem Arbeitsschutz dient.

Bevorzugt ist vorgesehen, dass das Feststellelement selbstverriegelnd ausgebildet ist. Dies wird bewerkstelligt, indem der Federbügel beim Verschwenken der Handkurbel aus einer Ruheposition rückstellend bzw. federelastisch ausgelenkt wird und der Verriegelungsabschnitt am Federbügel durch Rückfedern bzw. ein Rückstellen selbsttätig die Stirnseite der Eingangswelle zumindest teilweise form schlüssig übergreift, wenn die Handkurbel eine Gebrauchsposition einnimmt. Eine Entriegelung kann durch manuelles Zurückbewegen bzw. Zurückziehen des Federbügels am Feststellelement erfolgen, wodurch der Formschluss zwischen dem Verriegelungsabschnitt am Federbügel und der Stirnseite der Eingangswelle aufgehoben wird.

Am Federbügel können mehrere Verriegelungsabschnitte und insbesondere zwei Verriegelungsabschnitte ausgebildet sein, so dass mehrere unterschiedliche Gebrauchspositionen für die Handkurbel ermöglicht werden. Der Federbügel ist bevorzugter Weise über einen bogenförmigen Abschnitt mit dem Befestigungsabschnitt verbunden, wobei dieser bogenförmige Abschnitt die federelastischen Eigenschaften des Federbügels zumindest begünstigt.

Eine gelenkige Verbindung zwischen einer Handkurbel und der Eingangswelle einer Stützwinde wird häufig über eine Kulissenführung realisiert, wobei im Verbindungsbereich an der Handkurbel zwei gegenüberliegende Langlochkulissen ausgebildet sind, in denen jeweils ein mit der Eingangswelle verbundener Kulissendorn aufgenommen ist und worüber die drehfeste Verbindung zur Eingangswelle hergestellt wird. Bevorzugter Weise ist der Befestigungsabschnitt am erfindungsgemäßen Feststellelement derart ausgebildet, dass dieser von außen beidseitig in die Langlochkulissen oder einseitig in nur eine Langlochkulisse an der Handkurbel eingreifen kann. Hierdurch wird die Befestigung des Feststellelements an der Handkurbel bewerkstelligt. Ferner werden die am Federbügel aufzuwendenden Arretierungskräfte und -momente an der Handkurbel abgestützt. Des Weiteren können zusätzlich auch die Kulissendorne durch Blockieren der Langlochkulissen gesperrt werden, so dass die Handkurbel in axialer Richtung nicht mehr relativ zur Eingangswelle bewegt werden kann.

Alternativ kann vorgesehen sein, dass der Befestigungsabschnitt am erfindungsgemäßen Feststellelement derart ausgebildet ist, dass dieser im Verbindungsbereich das axiale Ende der Handkurbel zumindest teilweise übergreifen kann. Beide Befestigungskonzepte lassen sich auch miteinander kombinieren.

Bevorzugt ist vorgesehen, dass das erfindungsgemäße Feststellelement im Wesentlichen aus einem Edelstahlmaterial oder einem rostfreien Federstahlmaterial besteht und insbesondere durch Umformung eines Blechmaterials hergestellt wurde. Das erfindungsgemäße Feststellelement kann einstückig ausgebildet sein. Dessen ungeachtet kann der Verriegelungsabschnitt an einem separaten Kunststoffteil ausgebildet sein, das als Endstück am Federbügel befestigt ist. Hierdurch kann z. B. ein metallisches Kratzen des Federbügels auf der Eingangswelle verhindert werden. Bevorzugt weist zumindest der Endabschnitt des Federbügels oder das am Federbügel befestigte Kunststoffteil eine Warnfarbgebung auf. Eine solche Warnfarbgebung kann unifarben (bspw. in Neonfarben oder sonstigen Signalfarben) oder mehrfarbig gestaltet sein.

Weitere Merkmale und Vorteile der Erfindung ergeben sich aus der nachfolgenden Beschreibung von bevorzugten Ausführungsformen der Erfindung mit Bezug auf die beigefügten Figuren, wobei einzelne Merkmale von verschiedenen Ausführungsformen zu neuen Ausführungsformen kombiniert werden können.
- Fig. 1a: zeigt in einer Seitenansicht ein erstes Ausführungsbeispiel eines erfindungsgemäßen Feststellelements.
- Fig. 1b: zeigt das Feststellelement der Fig. 1 a in einer Vorderansicht, gemäß dem in Fig. 1a angegebenen Schnittverlauf.
- Fig. 2: veranschaulicht in einer Seitenansicht die selbstverriegelnde Eigenschaft des Feststellelements aus Fig. 1 beim Verschwenken der Handkurbel.
- Fig. 3: zeigt in einer Seitenansicht ein zweites Ausführungsbeispiel eines erfindungsgemäßen Feststellelements.
- Fig. 4: zeigt in einer Seitenansicht ein drittes Ausführungsbeispiel eines erfindungsgemäßen Feststellelements.
- Fig. 5: zeigt in einer Seitenansicht ein viertes Ausführungsbeispiel eines erfindungsgemäßen Feststellelements.

Nachfolgend sind gleiche und/oder funktionsgleiche Elemente mit denselben Bezugszeichen benannt. Unterschiedliche Merkmale verschiedener Ausführungsbeispiele können im Rahmen der Erfindung miteinander kombiniert werden.

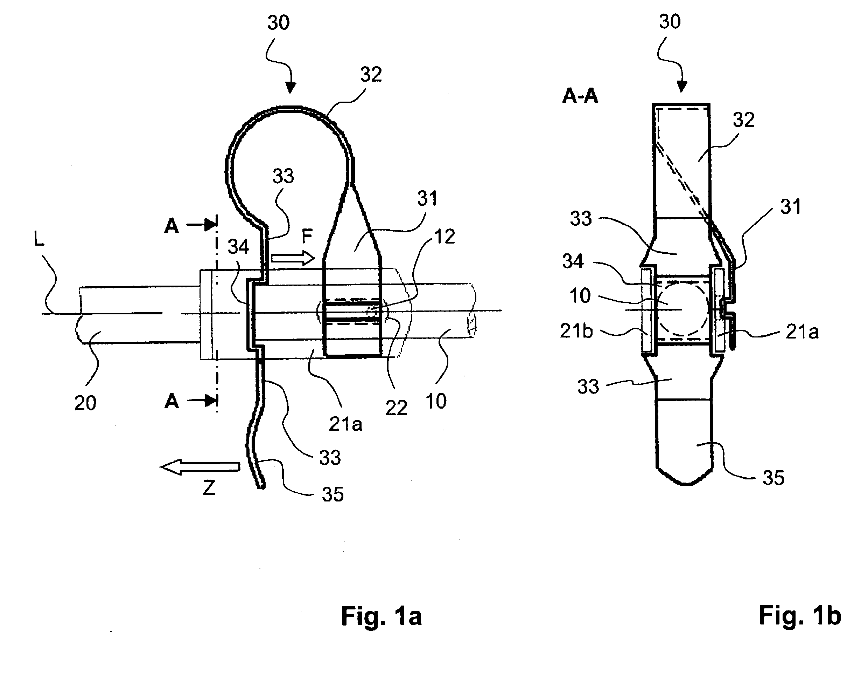

**Fig. 1a** zeigt eine abgebrochen dargestellte Eingangswelle 10 einer Stützwinde für Sattelauflieger und dergleichen. An der Eingangswelle 10 ist gelenkig eine ebenfalls abgebrochen dargestellte Handkurbel 20 befestigt. Die Handkurbel 20 weist einen gabelförmigen Endabschnitt auf, dessen Schenkel 21 a und 21 b das axiale Ende der Eingangswelle 10 zweiseitig umgreifen (siehe auch **Fig. 1** **b**). Die Schenkel 21a und 21 b des gabelförmigen Endabschnitts sind jeweils mit einer Langlochkulisse 22 ausgebildet. Die gelenkige Befestigung der Handkurbel 20 an der Eingangswelle 10 erfolgt durch Kulissendorne 12, die an der Eingangswelle 10 ausgebildet sind und die in die Kulissenführungen 22 eingreifen, wodurch eine kardangelenkähnliche Verbindung geschaffen ist. Anstelle von Kulissendornen 12 kann auch ein lösbarer Zapfen vorgesehen sein, der in eine Querbohrung durch die Eingangswelle 10 eingesteckt ist. Bei der gelenkigen Befestigung der Handkurbel 20 an der Eingangswelle 10 kann es sich um eine lösbare Befestigung handeln, so dass die Handkurbel 20 abnehmbar ist.

Die Darstellung der Fig. 1 zeigt die Handkurbel 20 in einer Gebrauchsposition, wobei der Endabschnitt der Handkurbel 20 und der Endabschnitt der Eingangswelle 10 zueinander axial fluchtend ausgerichtet sind, was durch die dargestellte gemeinsame Achse L verdeutlicht ist. Eine solche axial fluchtende Ausrichtung von Handkurbel 20 und Eingangswelle 10 muss jedoch nicht zwangsläufig vorliegen.

Um die Handkurbel 20 in der gezeigten Gebrauchsposition zu arretieren, ist ein Feststellelement 30 vorgesehen. Das Feststellelement 30 weist einen Befestigungsabschnitt 31 für die Befestigung an der Handkurbel 20 auf. Ferner weist das Feststellelement 30 einen Federbügel 33 auf, der über einen bogenförmigen Abschnitt (Federbogen) 32 mit dem Befestigungsabschnitt 31 verbunden ist. Am Federbügel 33 ist ein kulissenartiger Verriegelungsabschnitt 34 ausgebildet. In der dargestellten Gebrauchsposition der Handkurbel 20 übergreift der Verriegelungsabschnitt 34 formschlüssig die Stirnseite der Eingangswelle 10 und wird aufgrund der dem Federbügel 33 innewohnenden Federwirkung gleichzeitig gegen diese Stirnseite der Eingangswelle 10 gezogen, was durch den Pfeil F verdeutlicht ist. Hierdurch wird die Arretierung der Handkurbel 20 bewirkt. Ferner werden die Gewichtskräfte der Handkurbel 20 und die wirksamen Kippmomente auf der Eingangswelle 10 abgestützt. Durch manuelles Aufbringen einer Zugkraft am Endabschnitt 35 des Federbügels 33, was durch den Pfeil Z verdeutlicht ist, kann der Federbügel 33 zurückbewegt und die Arretierung gelöst werden.

Der Befestigungsabschnitt 31 des Feststellelements 30 ist derart ausgebildet, dass dieser formschlüssig in die Langlochkulisse 22 an der Handkurbel 20 eingreift (siehe auch Fig. 1 b). Hierdurch erfolgt die Befestigung des Feststellelements 30. Ferner werden die am Federbügel 33 aufzuwendenden Arretierungskräfte und -momente abgestützt. Des weiteren wird die Langlochkulisse 22 gesperrt, so dass die Handkurbel 20 nicht mehr in einer axialen Richtung (L) relativ zur Eingangswelle 20 bewegbar ist. Abweichend zu dem in den Fig. 1a und 1b dargestellten Ausführungsbeispiel kann ein Befestigungsabschnitt 31 vorgesehen sein, der beidseitig in beide Langlochkulissen 22 an der Handkurbel 20 eingreift.

Das Feststellelement 30 ist einstückig als Blechformteil aus einem Edelstahlmaterial oder einem rostfreien Federstahlmaterial hergestellt. Es kann jedoch auch aus einem beliebigen anderen rückstellfähigen Material ausgebildet sein. Die Breite des Feststellelements 30 überragt im Wesentlichen nicht die Breite des gabelförmigen Abschnitts der Handkurbel 20, was sehr gut aus Fig. 1b ersichtlich ist. Der Federbügel 33 ist im Bereich seiner Durchführung zwischen den Schenkeln 21 a und 21 b an der Handkurbel 20 schmaler ausgebildet, was ebenfalls sehr gut aus Fig. 1b ersichtlich ist. Indem der Federbügel 33 außerhalb dieser Durchführung die Schenkel 21 a und 21 b übergreift, wird der Federbügel 33 an den Schenkeln 21 a und 21 b abgestützt und in Axialrichtung (L) geführt.

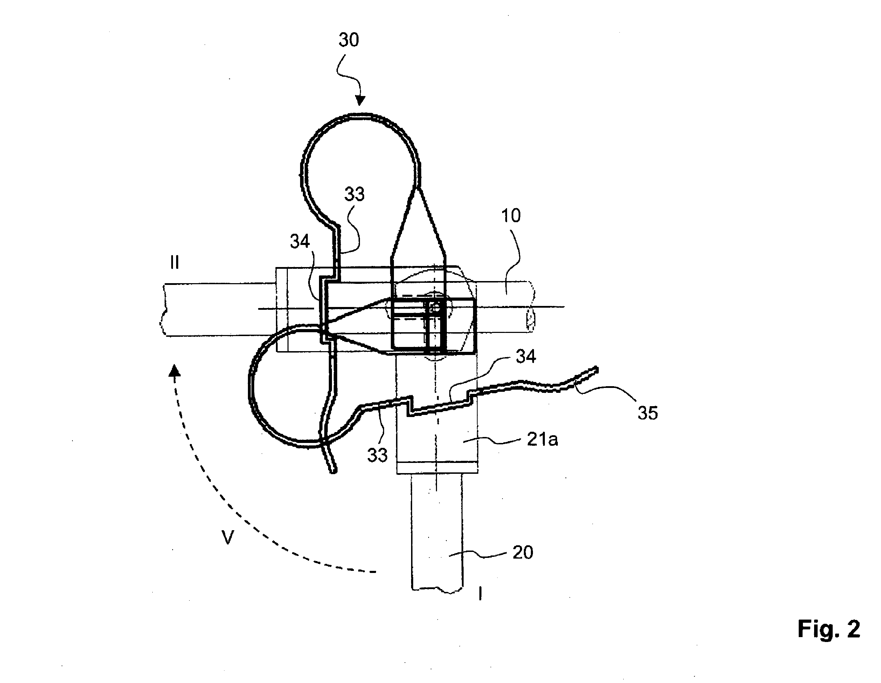

**Fig. 2** veranschaulicht das Verschwenken der Handkurbel 20 aus einer eingeklappten Ruheposition I in die ausgeklappte Gebrauchsposition II gemäß Fig. 1 a, was durch einen Schwenkpfeil V verdeutlicht ist. Das Feststellelement 30 ist selbstverriegelnd ausgebildet, derart, dass der Federbügel 33 beim Verschwenken bzw. Anheben V der Handkurbel 20 elastisch ausgelenkt wird und der Verriegelungsabschnitt 34 am Federbügel 33 durch Rückfedern des Federbügels 33 selbsttätig die Stirnseite der Eingangswelle 10 formschlüssig übergreift, wenn die Handkurbel 20 die dargestellte Gebrauchsposition II einnimmt. Das Auslenken des Federbügels 33 beim Verschwenken V der Handkurbel 20 wird selbsterklärend durch Abgleiten auf der Eingangswelle 10 bewirkt.

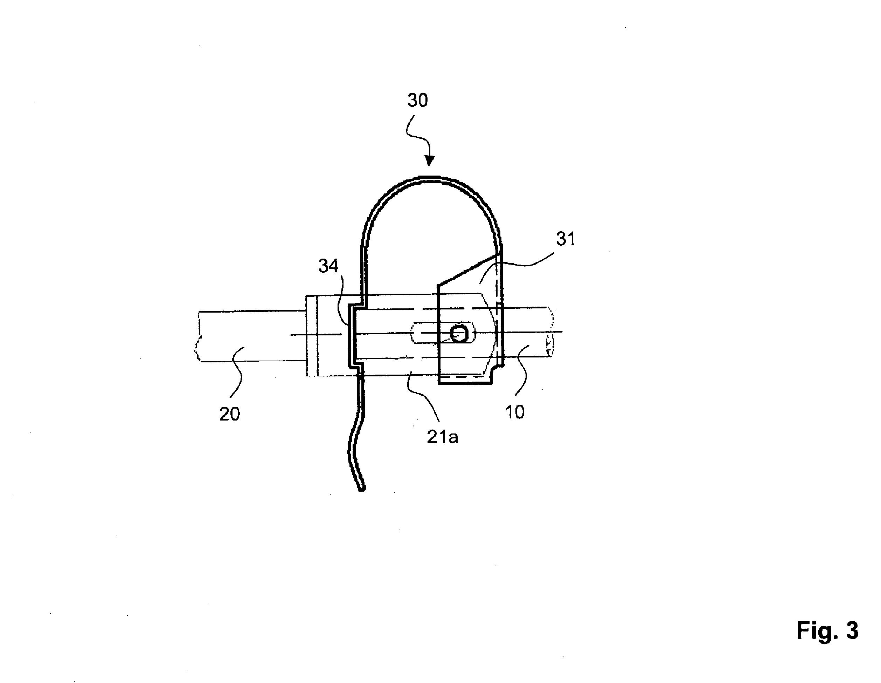

**Fig. 3** zeigt ein zweites Ausführungsbeispiel eines Feststellelements 30, dessen Befestigungsabschnitt 31 derart ausgebildet ist, dass dieser das axiale Ende der Handkurbel 20 formschlüssig übergreift, wobei zumindest einer der beiden Schenkel 21 a und 21 b übergriffen wird.

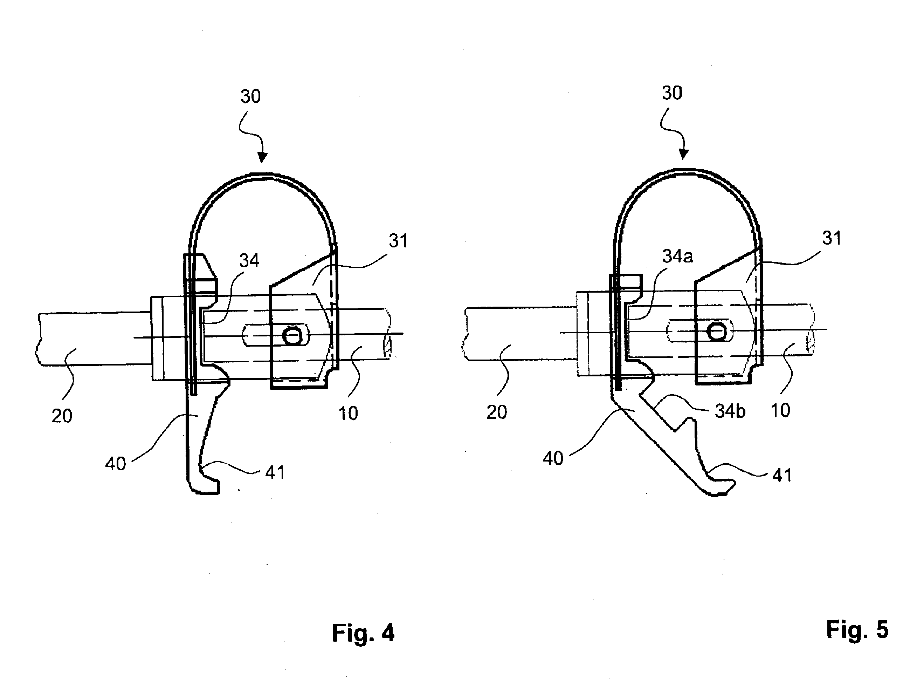

**Fig. 4** zeigt ein drittes Ausführungsbeispiel eines Feststellelements 30, welches ein Kunststoffteil 40 aufweist, das als Endstück am Federbügel 33 befestigt ist. Die Befestigung kann durch Verschrauben, Vernieten oder Verkleben mit dem Federbügel 33 oder durch Umspritzen des Federbügels 33 mit Kunststoffmaterial erfolgen. Am Kunststoffteil 40 ist der Verriegelungsabschnitt 34 ausgebildet. Ein solches Kunststoffteil 40 kann verhältnismäßig kostengünstig und mit einer hohen Formgestaltungsfreiheit hergestellt werden. Ferner besteht die Möglichkeit, das Kunststoffteil 40 mit einer Warnfarbgebung auszubilden, wobei auch der Federbügel 33 und insbesondere der Endabschnitt 35 des Federbügels 33 mit einer solchen Warnfarbgebung ausgestattet werden kann. Mit 41 ist ein Griffstück am Kunststoffteil 40 bezeichnet, das einen Verletzungsschutz und eine angenehme Haptik beim Zurückziehen des Federbügels 33 bietet.

**Fig. 5** zeigt ein viertes Ausführungsbeispiel eines Feststellelements 30, bei dem abweichend zum dritten Ausführungsbeispiel der Fig. 4 am Kunststoffteil 40 zwei Verriegelungsabschnitte 34a und 34b ausgebildet sind, wodurch zwei unterschiedliche Arretierungspositionen für eine Handkurbel 20 ermöglicht werden. Somit sind z. B. auch S-förmige Handkurbeln mit demselben Feststellelement 30 arretierbar (im zweiten Verriegelungsabschnitt 34b). Zur Ausbildung mehrerer Verriegelungsabschnitte eignet sich besonders der Einsatz eines Kunststoffteils 40, wobei diese auch direkt am Federbügel 33 ausgebildet sein könnten.

Die vorausgehend erläuterten unterschiedlichen Ausführungsbeispiele eines erfindungsgemäßen Feststellelements 30 sind lösbar an herkömmlichen Handkurbeln 20 befestigbar und können somit bei Beschädigung oder Verschleiß ausgetauscht werden. Die Funktion der Handkurbel 20 wird hierdurch nicht beeinträchtigt und bleibt auch dann erhalten, wenn das Feststellelement 30 ausfällt oder wegfällt. Ferner ist möglich, dass das Feststellelement 30 unlösbar an der Handkurbel 20 befestigt ist.

### Bezugszeichenliste

- 10: Eingangswelle (Stützwinde)
- 12: Kulissendorn; Zapfen
- 20: Handkurbel
- 21 a/b: Schenkel, Endabschnitt Handkurbel
- 22: Langlochkulisse
- 30: Feststellelement
- 31: Befestigungsabschnitt
- 32: bogenförmiger Abschnitt; Verbindungsabschnitt
- 33: Federbügel
- 34: Verriegelungsabschnitt
- 35: Endabschnitt
- 40: Kunststoffteil
- 41: Griffstück
- I: Ruheposition
- II: Gebrauchsposition
- F: Federkraft des Federbügels
- Z: manuelle Zugkraft

## Patentansprüche

1. Betätigungssystem für Stützwinden an **Sattelaufliegern,** umfassend eine Handkurbel (20) und ein Feststellelement (30) zur Arretierung der Handkurbel (20) auf einer Eingangswelle (10) der Stützwinde,
wobei die Handkurbel (20) gelenkig an der Eingangswelle (10) befestigt und zwischen wenigstens einer eingeklappten Ruheposition (I) und wenigstens einer ausgeklappten Gebrauchsposition (II) verschwenkbar ist,
wobei das Feststelleelement (30) einen Befestigungsabschnitt (31) für die Befestigung an der Handkurbel (20) aufweist, sowie einen mit dem Befestigungsabschnitt (31) verbundenen Federbügel (33), an dem wenigstens ein Verriegelungsabschnitt (34) ausgebildet ist, und
wobei der Verriegelungsabschnitt (34) in einer ausgeklappten Gebrauchsposition (II) der Handkurbel (20) die Stirnseite der Eingangswelle (10) zumindest teilweise formschlüssig übergreift und gleichzeitig gegen diese Stirnseite der Eingangswelle (10) vorgespannt ist bzw. gezogen wird (F), was eine lösbare Arretierung der Handkurbel (20) bewirkt.

2. Betätigungssystem nach Anspruch 1, wobei das Feststellelement (30) selbstverriegeind ausgebildet ist, derart, dass der Federbügel (33) beim Verschwenken der Handkurbel (20) aus einer Ruheposition (I) elastisch ausgelenkt wird und der Verriegelungsabschnitt (34) am Federbügel (33) durch eine Rückstellkraft bzw. ein Rückfedern (F) selbsttätig die Stirnseite der Eingangswelle (10) zumindest teilweise formschlüssig übergreift, wenn die Handkurbel (20) eine Gebrauchsposition (II) einnimmt.

3. Betätigungssystem nach Anspruch 1 oder 2, wobei am Federbügel (33) mehrere Verriegelungsabschnitte und insbesondere zwei Verriegelungsabschnitte (34a, 34b) ausgebildet sind, so dass mehrere unterschiedliche Gebrauchspositionen für die Handkurbel (20) ermöglicht werden.

4. Betätigungssystem nach einem der vorausgehenden Ansprüche, wobei der Federbügel (33) über einen bogenförmigen Abschnitt (32) mit dem Befestigungsabschnitt (31) verbunden ist.

5. Betätigungssystem nach einem der Ansprüche 1 bis 4, wobei der Befestigungsabschnitt (31) dafür ausgebildet ist, wenigstens in eine Langlochkulisse (22) an der Handkurbel (20) einzugreifen.

6. Betätigungssystem nach einem der Ansprüche 1 bis 4, wobei der Befestigungsabschnitt (31) dafür ausgebildet ist, das axiale Ende der Handkurbel (20) zumindest teilweise zu übergreifen.

7. Betätigungssystem nach einem der vorausgehenden Ansprüche, wobei das Feststellelement (30) im Wesentlichen aus einem Edelstahlmaterial oder einem rostfreien Federstahlmaterial besteht.

8. Betätigungssystem nach einem der vorausgehenden Ansprüche, wobei der Verriegelungsabschnitt (34) an einem separaten Kunststoffteil (40) ausgebildet ist, das als Endstück am Federbügel (33) befestigt ist.

9. Betätigungssystem nach einem der Ansprüche 1 - 7, wobei zumindest der Endabschnitt (35) des Federbügels (33) eine Warnfarbgebung aufweist.

10. Betätigungssystem nach Anspruch 8, wobei das am Federbügel (33) befestigte Kunststoffteil (40) eine Warnfarbgebung aufweist.

## Claims

1. An actuating system for support winches or landing gear on semi-trailers, comprising a hand crank (20) and a fixing element (30) for locking the hand crank (20) on an input shaft (10) of the support winch,
wherein the hand crank (20) is fastened to the input shaft (10) in an articulated manner and can pivot between at least one folded-in rest position (I) and at least one folded-out usage position (II),
wherein the fixing element (30) comprises a fastening section (31) for fastening to the hand crank (20), and a spring bar (33) connected to the fastening section (31) on which at least one locking section (34) is formed, and
wherein the locking section (34) reaches over the end face of the input shaft (10) in an at least partially form-fitting manner in a folded-out usage position (II) of the hand crank (20) and is simultaneously pre-tensioned or pulled against said end face of the input shaft (10) (F), whereby the hand crank (20) is releasably locked.

2. The actuating system of claim 1, wherein the fixing element (30) is designed self-locking such that when the hand crank (20) is pivoted from a rest position (I) the spring bar (33) is elastically deflected or moved and the locking section (34) on the spring bar (33) due to a restoring force or resetting (F) automatically reaches over the end face of the input shaft (10) in an at least partially form-fitting manner when the hand crank (20) assumes a usage position (II).

3. The actuating system of claim 1 or 2, wherein on the spring bar (33) there are formed several locking sections and in particular two locking sections (34a, 34b) so that several different usage positions for the hand crank (20) are made possible.

4. The actuating system of any one of the preceding claims, wherein the spring bar (33) is connected to the fastening section (31) by means of an arched section (32).

5. The actuating system of any one of claims 1 to 4, wherein the fastening section (31) is designed to engage at least one elongated slot (22) on the hand crank (20).

6. The actuating system of any one of claims 1 to 4, wherein the fastening section (31) is designed to at least partially reach over the axial end of the hand crank (20).

7. The actuating system of any one of the preceding claims, wherein the fixing element (30) essentially consists of or is made from a high quality steel material or a stainless spring steel.

8. The actuating system of any one of the preceding claims, wherein the locking section (34) is formed on a separate plastic part (40) which is fastened as an end piece on the spring bar (33).

9. The actuating system of any one of the claims 1 - 7 , wherein at least the end section (35) of the spring bar (33) has a signal color or warning color.

10. The actuating system of claim 8, wherein the plastic part (40) fastened to the spring bar (33) has a signal color or warning color.

## Revendications

1. Système d'actionnement pour un treuil de soutien sur un semi-remorque, comprenant une manivelle (20) et un élément de blocage (30) pour arrêter la manivelle (20) sur un arbre d'entrée (10) du treuil de soutien,
dans lequel la manivelle (20) est fixée de manière articulée sur l'arbre d'entrée (10) et est capable de pivoter entre au moins une position de repos rabattue (I) et au moins une position d'utilisation déployée (II),
dans lequel l'élément de blocage (30) comprend un tronçon de fixation (31) pour la fixation sur la manivelle (20), ainsi qu'un étrier à ressort (33) relié au tronçon de fixation (31) et sur lequel est réalisé au moins un tronçon de verrouillage (34), et
dans lequel le tronçon de verrouillage (34), dans une position d'utilisation déployée (II) de la manivelle (20), coiffe au moins partiellement par coopération de formes la face frontale de l'arbre d'entrée (10), et est simultanément précontraint ou tiré (F) contre cette face frontale de l'arbre d'entrée (10), ce qui assure d'arrêter la manivelle (20) de manière libérable.

2. Système d'actionnement selon la revendication 1, dans lequel l'élément de blocage (30) est réalisé de manière autoverrouillable, de telle façon que l'étrier à ressort (33) est dévié de manière élastique lors du pivotement de la manivelle (20) hors d'une position de repos (I), et le tronçon de verrouillage (34) sur l'étrier à ressort (33) coiffe au moins partiellement par coopération de formes la face frontale de l'arbre d'entrée (10) de façon automatique par une force de rappel ou par un ressort de rappel (F) quand la manivelle (20) occupe une position d'utilisation (II).

3. Système d'actionnement selon la revendication 1 ou 2, dans lequel plusieurs tronçons de verrouillage et en particulier deux tronçons de verrouillage (34a, 34b) sont réalisés sur l'étrier à ressort (33), de sorte que plusieurs positions d'utilisation différentes pour la manivelle (20) sont rendues possibles.

4. Système d'actionnement selon l'une des revendications précédentes, dans lequel l'étrier à ressort (33) est relié au tronçon de fixation (31) via un tronçon en forme d'arc (32).

5. Système d'actionnement selon l'une des revendications 1 à 4, dans lequel le tronçon de fixation (31) est réalisé pour s'engager au moins dans une glissière à trou oblong (22) sur la manivelle (20).

6. Système d'actionnement selon l'une des revendications 1 à 4, dans lequel le tronçon de fixation (31) est réalisé pour coiffer au moins partiellement l'extrémité axiale de la manivelle (20).

7. Système d'actionnement selon l'une des revendications précédentes, dans lequel l'élément de blocage (30) est réalisé sensiblement en un matériau à base d'acier spécial ou en un matériau à base d'acier-ressort inoxydable.

8. Système d'actionnement selon l'une des revendications précédentes, dans lequel le tronçon de verrouillage (34) est réalisé sur une partie séparée en matière plastique (40), qui est fixée sur l'étrier à ressort (33) à titre de pièce terminale.

9. Système d'actionnement selon l'une des revendications 1 à 7, dans lequel au moins le tronçon terminal (35) de l'étrier à ressort (33) présente une coloration d'avertissement.

10. Système d'actionnement selon la revendication 8, dans lequel la partie en matière plastique (40) fixé sur l'étrier à ressort (33) présente une coloration d'avertissement.
